# EUROPÄISCHE PATENTANMELDUNG

(11) **EP 4 733 086 A1**
(43) Veröffentlichungstag der Anmeldung: **29.04.2026**
(21) Anmeldenummer: 25204800.4
(22) Anmeldetag: 26.09.2025
(51) Int. Cl.: B60C 11/03, B60C 11/11, B60C 11/12

(54) **FAHRZEUGLUFTREIFEN**

(30) Priorität: 28.10.2024 DE 102024210365
(71) Anmelder: Continental Reifen Deutschland GmbH, 30175 Hannover (DE)
(72) Erfinder: Rittweger, Stefan, 30175 Hannover (DE); Micuch, Michal, 020 01 Púchov (SK); Kotlas, Jan, 020 01 Púchov (SK)
(74) Vertreter: Continental Corporation

(57) **Zusammenfassung**

Die Erfindung betrifft einen Fahrzeugluftreifen (1) mit wenigstens einer Profilblockreihe (2a, 2b), die in axialer Richtung (3) des Fahrzeugluftreifens durch eine Umfangsrille (4) begrenzt sowie aus einer Vielzahl von in Umfangsrichtung (23) des Fahrzeugluftreifens hintereinander angeordneten und jeweils durch eine in die Umfangsrille (4) mündende Quer- oder Schrägrille (5) von einander beabstandeten Profilblockelementen (6) ausgebildet ist, wobei die Umfangsrille sowie die Quer- oder Schrägrillen jeweils durch einen Rillengrund (7) und zwei Rillenflanken (8, 9) begrenzt sind, wobei sich die jeweilige Rillenflanke in radialer Richtung ausgehend vom zugehörigen Rillengrund bis zu einer radial äußeren Oberfläche (10) des von ihr begrenzten Profilblockelements erstreckt, wobei der Rillengrund unter Anbindung an die erste oder zweite Rillenflanke der Umfangsrille und/oder der Quer- oder Schrägrille eine jeweilige stegförmige Anhebung (11) aufweist, die sich in Längsrichtung der Umfangsrille und/oder der Quer- oder Schrägrille erstreckt, wobei die Anhebung einen ersten Längsabschnitt (12), einen zweiten Längsabschnitt (13) und einen dazwischen angeordneten ersten Übergangsabschnitt (15) aufweist, wobei der erste Längsabschnitt (12) und der zweite Längsabschnitt (13) in Bezug auf die radial äußere Oberfläche (10) des zugehörigen Profilblockelements (6) unterschiedliche Höhen aufweisen, und wobei der erste Übergangsabschnitt (15) wenigstens abschnittsweise gekrümmt ausgebildet ist.

## Beschreibung

Die Erfindung betrifft einen Fahrzeugluftreifen mit wenigstens einer Profilblockreihe, die in axialer Richtung des Fahrzeugluftreifens, das heißt quer zur Umfangsrichtung bzw. in Querrichtung, durch wenigstens eine Umfangsrille begrenzt ist. Die Profilblockreihe ist aus einer Vielzahl von in Umfangsrichtung des Fahrzeugluftreifens hintereinander angeordneten und jeweils durch eine in die Umfangsrille mündende Quer- oder Schrägrille von einander beabstandeten Profilblockelementen ausgebildet. Die Umfangsrille sowie die Quer- oder Schrägrillen sind jeweils durch einen Rillengrund und zwei Rillenflanken begrenzt, wobei die Rillenflanken sich in radialer Richtung ausgehend vom zugehörigen Rillengrund bis zu einer radial äußeren Oberfläche des von ihr begrenzten Profilblockelements erstrecken.

Die DE 10 2012 108 870 A1 offenbart einen Fahrzeugluftreifen, umfassend einen profilierten Laufstreifen mit einer Außenschulter und einer Innenschulter, durch Rillen von einander beabstandete Profilbänder, beispielsweise Profilrippen oder Profilblockreihen, eine in der Außenschulter ausgebildete, über den Umfang des Reifens erstreckte Umfangsrille, welche zwei Profilblockreihen axial voneinander trennt, sowie über den Umfang des Reifens hintereinander angeordnete Querrillen, die sich jeweils mit einer in radialer Richtung gemessenen Tiefe in axialer Richtung von der einen Profilblockreihe über die Umfangsrille hinweg in die andere Profilblockreihe erstrecken. Die Tiefe der Querrille ist größer als die Tiefe der Umfangsrille im Erstreckungsbereich zwischen den Querrillen. Die Umfangsrille befindet sich jeweils in den Erstreckungsabschnitten zwischen den in Umfangsrichtung benachbarten Querrillen. Sie erstreckt sich längs der Erstreckung in die Drehrichtung des Reifens, beginnend von der in Drehrichtung vorgeordneten Querrille bis zur nachgeordneten Querrille. Dabei reduziert sich die Tiefe der Rille ausgehend von einer maximalen Tiefe durch eine treppenartige Anhebung des Rillengrundes mit mindestens einer Stufe bis zu einer minimalen Tiefe. Zusätzlich nimmt die Breite der Rille im radial inneren Erstreckungsabschnitt der Umfangsrille stetig ab.

Bei Reifenprofilen von Fahrzeugluftreifen besteht regelmäßig ein Zielkonflikt zwischen den Trockenhandling-Eigenschaften und den Nasshandling-Eigenschaften, insbesondere den Aquaplaning-Eigenschaften.

Die Aufgabe der vorliegenden Erfindung besteht darin, einen Fahrzeugluftreifen bereitzustellen, der den genannten Zielkonflikt besser löst, insbesondere ohne sich dabei nachteilig auf den Profilabrieb auszuwirken. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen umfasst wenigstens eine Profilblockreihe, die in axialer Richtung des Fahrzeugluftreifens durch eine Umfangsrille begrenzt sowie aus einer Vielzahl von in Umfangsrichtung des Fahrzeugluftreifens hintereinander angeordneten und jeweils durch eine in die Umfangsrille mündende Quer- oder Schrägrille von einander beabstandeten Profilblockelementen ausgebildet ist, wobei die Umfangsrille sowie die Quer- oder Schrägrillen jeweils durch einen Rillengrund und zwei Rillenflanken begrenzt sind, wobei sich die jeweilige Rillenflanke in radialer Richtung des Fahrzeugluftreifens ausgehend vom zugehörigen Rillengrund bis zu einer radial äußeren Oberfläche des von ihr begrenzten Profilblockelements erstreckt, wobei der Rillengrund unter Anbindung an die erste oder zweite Rillenflanke der Umfangsrille und/oder der Quer- oder Schrägrille eine jeweilige stegförmige Anhebung aufweist, die sich in Längsrichtung der Umfangsrille und/oder der Quer- oder Schrägrille erstreckt, wobei die Anhebung einen ersten Längsabschnitt, einen zweiten Längsabschnitt und einen dazwischen angeordneten ersten Übergangsabschnitt aufweist, wobei der erste Längsabschnitt und der zweite Längsabschnitt in Bezug auf die radial äußere Oberfläche des zugehörigen Profilblockelements unterschiedliche Höhen aufweisen, und wobei der erste Übergangsabschnitt wenigstens abschnittsweise gekrümmt ausgebildet ist.

Mit anderen Worten kann entweder die Umfangsrille wenigstens eine stegförmige Anhebung aufweisen, oder die Querrille kann wenigstens eine stegförmige Anhebung aufweisen, oder die Schrägrille kann wenigstens eine stegförmige Anhebung aufweisen, oder eine Kombination der hier genannten Rillen können jeweils wenigstens eine stegförmige Anhebung aufweisen. "Jeweils wenigstens eine Anhebung" bedeutet, dass der Rillengrund der jeweiligen Rille unter Anbindung an die erste Rillenflanke eine erste Anhebung oder unter Anbindung an die zweite Rillenflanke eine erste Anhebung oder unter Anbindung an die erste Rillenflanke eine erste Anhebung sowie unter Anbindung an die zweite Rillenflanke eine zweite Anhebung aufweisen kann. Wenn sowohl an der ersten Rillenflanke eine erste stegförmige Anhebung als auch an der zweiten Rillenflanke eine zweite stegförmige Anhebung angeordnet sind, verlaufen diese im Wesentlichen parallel zueinander. Diese Anhebungen können in ihrer Längserstreckung spiegelsymmetrisch ausgeformt sein, je nach Form der jeweiligen Rille.

Durch die unterschiedlich hohen Längsabschnitte der jeweiligen stegförmigen Anhebung mit dem dazwischen liegenden Übergangsabschnitt kann eine wellenförmige Stufe an der jeweiligen Rillenflanke realisiert werden, die wenigstens teilumlaufen um das Profilblockelement ausgebildet sein kann. Durch die in radialer Richtung unterschiedlich hoch ausgebildete Anhebung kann das Volumen und die Steifigkeit des jeweiligen Profilblockelements sowie das vorhandene Rillenvolumen lokal eingestellt werden. Bei Querschnittsbetrachtung der Rille ist die Rillenflanke der jeweiligen Rille, an der die jeweilige Anhebung angebunden ist, stufenförmig ausgebildet, aufweisend eine radial nach außen gerichtete Oberfläche, deren Abstand zur radial äußeren Oberfläche des jeweiligen Profilblockelements variiert.

Ein Fahrzeugluftreifen, der an den Rillenflanken einer Schulterquerrille jeweils eine genannte stegförmige Anhebung aufweist, kann gute Trockenhandling- und Aquaplaning-Eigenschaften aufweisen.

Ein Fahrzeugluftreifen, der an den Rillenflanken den Umfangsrille jeweils eine genannte stegförmige Anhebung aufweist, kann gute Nasshandling-Eigenschaften, insbesondere Aquaplaning-Eigenschaften, aufweisen und gleichzeitig resistenter gegen Abrieb sein.

Der genannte Zielkonflikt wird durch das Vorsehen von stufenartig ausgebildeten Rillenflanken mit einer wellenförmigen Stufe bzw. Anhebung gelöst, die das Profilblockelement einerseits an höher ausgebildeten Längsabschnitten der jeweiligen Anhebung lokal versteift und andererseits an relativ dazu niedriger ausgebildeten Längsabschnitten der jeweiligen Anhebung lokal mehr Rillenvolumen zur Wasserführung zur Verfügung stellt.

Die jeweilige stegförmige Anhebung weist eine Längserstreckung entlang der Längserstreckung der jeweiligen Rillenflanke auf. Anders gesagt verläuft die jeweilige Anhebung in Längsrichtung der jeweiligen Rille, sei es eine Umfangsrille, eine Querrille oder eine Schrägrille. Der Rillengrund begrenzt die jeweilige Rille nach radial innen und erstreckt sich längs der jeweiligen Rille. Der Rillengrund ist direkt oder über Übergangsbereiche mit den zugehörigen Rillenflanken verbunden.

Die genannte "axiale Richtung" verläuft parallel zur Rotationsachse des Fahrzeugluftreifens bzw. in Querrichtung der Lauffläche. Die genannte "Umfangsrichtung" ist auf den Laufstreifen bzw. den Umfang des Fahrzeugluftreifens bezogen.

"Gekrümmt" bedeutet in Bezug auf den Übergangsabschnitt, dass die Höhe des einen Längsabschnitts an die Höhe des daran anschließenden Längsabschnitts der jeweiligen stegförmigen Anhebung angeglichen wird, ohne stufenartige bzw. kantige Übergänge aufzuweisen. Der Übergangsabschnitt ist ebenfalls als Längsabschnitt zu verstehen, der zwei in Längsrichtung der jeweiligen Rille benachbarte Längsabschnitte der Anhebung miteinander verbindet. Mittels des Übergangsabschnitts wird ein weicher Übergang von der ersten Höhe des einen Längsabschnitts auf die zweite Höhe des in Längsrichtung dahinter liegenden anderen Längsabschnitts realisiert. "Gekrümmt" bedeutet auch "nicht geradlinig verlaufend". Der Übergangsabschnitt der Anhebung ist in der Seitenansicht von der Mittellinie der Umfangsrille betrachtet gekrümmt, beispielsweise zweifach gekrümmt, ausgeformt. Bei einer zweifach gekrümmten Ausführung weist der Übergangsabschnitt eine positive Krümmung sowie eine negative Krümmung mit einem dazwischen liegenden Wendepunkt auf. Anders gesagt weist der Übergangsabschnitt eine S-förmige Krümmung mit einem Wendepunkt, insbesondere in Form einer Sigmoidfunktion, auf. Der Graph der Funktion beschreibt also eine S-förmige Kurve.

Die jeweilige Umfangsrille ist im Querschnitt im Wesentlichen U-förmig ausgebildet. Die Umfangsrille ist zwischen zwei Profilblockreihen ausgebildet. Demnach ist die jeweilige Umfangsrille durch einen Rillengrund, eine an der ersten Profilblockreihe ausgebildete erste Rillenflanke und eine an der zweiten Profilblockreihe ausgebildete zweite Rillenflanke begrenzt. Die zweite Profilblockreihe kann die Schulter des Fahrzeugluftreifens bilden, wobei die Profilblockelemente entsprechend Schulterblöcke sind. Die zweite Profilblockreihe kann aber auch eine Profilblockreihe der Lauffläche und im Wesentlichen identisch zur ersten Profilblockreihe ausgebildet sein.

Die genannte Anhebung der Umfangsrille, der Querrille und/oder der Schrägrille ist nur einer einzigen Rillenflanke eines Profilblockelements zugeordnet und daran angebunden. Wenn an den gegenüberliegenden Rillenflanken derselben Rille eine jeweilige Anhebung vorgesehen ist, verlaufen diese im Wesentlichen parallel zueinander, ohne sich dabei gegenseitig zu berühren. Demnach ist zwischen den beiden Anhebungen ein Spalt oder eine Vertiefung ausgebildet. Anhebungen von in Umfangsrichtung hintereinanderliegenden Profilblockelementen können einteilig miteinander verbunden sein. Mithin kann eine in der Umfangsrille vorgesehene Anhebung eine zwei in Umfangsrichtung hintereinanderliegende Profilblockelemente voneinander trennende Quer- oder Schrägrille queren bzw. kreuzen. Damit kann an einer Rillenflanke der Umfangsrille eine sozusagen durchgehende Anhebung realisiert werden, die jedoch genau genommen aus mehreren einteilig miteinander verbundenen Anhebungen von in Umfangsrichtung hintereinander angeordneten Profilblockelementen besteht.

Alternativ oder ergänzend kann eine in der Quer- oder Schrägrille vorgesehene Anhebung die Umfangsrille queren bzw. kreuzen, wenn die Anhebung von einer Quer- oder Schrägrille eines Profilblockelements der ersten Profilblockreihe in eine Quer- oder Schrägrille eines Profilblockelements einer in axialer Richtung des Fahrzeugluftreifens benachbarten zweiten Profilblockreihe geführt wird. Entsprechend kann an einer Rillenflanke der Quer- oder Schrägrille eine sozusagen durchgehende Anhebung realisiert werden, die jedoch genau genommen aus mindestens zwei einteilig miteinander verbundenen Anhebungen von in axialer Richtung hintereinander angeordneten Profilblockelementen besteht.

Ein Profilblockelement kann eine oder mehrere Anhebungen aufweisen, nämlich zum Beispiel eine erste Anhebung an einer dieses Profilblockelement begrenzenden Rillenflanke der Umfangsrille und/oder eine zweite Anhebung an einer dieses Profilblockelement begrenzenden Rillenflanke der Quer- oder Schrägrille.

Wenn das Profilblockelement in axialer Richtung durch zwei Umfangsrillen und in Umfangsrichtung durch zwei Quer- oder Schrägrillen begrenzt ist, können an diesem Profilblockelement bis zu vier derartige Anhebungen vorgesehen sein, nämlich in jeder Rille eine Anhebung mit unterschiedlich hohen Längsabschnitten, die optional die entsprechend angrenzende Rille kreuzend einteilig mit einer Anhebung eines benachbarten Profilblockelements verbunden sein kann bzw. können. Die ein Profilblockelement umgebenden Anhebungen können einstückig miteinander verbunden sein und an ihren Übergängen in Bezug auf die radial äußere Oberfläche dieselbe Höhe aufweisen, um scharfe Kanten zu vermeiden.

Profilblockelemente sind die nach radial außen gerichteten, erhabenen Abschnitte auf der Lauffläche des Fahrzeugluftreifens, die direkt mit der Fahrbahn in Kontakt stehen und für die Traktion sowie das Trocken- sowie Nasshandling des Fahrzeugs verantwortlich sind. In Abhängigkeit der Anordnung der stegförmigen Anhebungen an einem oder mehreren Profilblöcken können im Straßengebrauch verbesserte Trockenhandling-Eigenschaften sowie Nasshandling-Eigenschaften realisiert werden.

Das Trockenhandling bezieht sich auf das Fahrverhalten und die HandlingEigenschaften eines Fahrzeugs bei trockenen Straßenbedingungen. Dabei geht es darum, wie gut der Reifen die Kräfte, die während der Fahrt auf trockener Fahrbahn auftreten, verarbeiten und in Fahrstabilität, Lenkpräzision und Sicherheit umsetzen kann. Bei Kurvenfahrten, Bremsmanövern und Ausweichmanövern wirken Querkräfte, die der Reifen aufnimmt und in Bodenhaftung umwandelt, um ein Ausbrechen oder Schleudern zu verhindern.

Die Nasshandling-Eigenschaften des Fahrzeugluftreifens beziehen sich auf das Verhalten des Fahrzeugluftreifens bei Fahrten auf nasser Fahrbahn. Sie betreffen das Fahrverhalten, die Stabilität und die Kontrolle über das Fahrzeug, wenn der Fahrzeugluftreifen mit Wasser bedeckte Straßenoberflächen berührt. Aquaplaning-Eigenschaften betreffen spezifisch die Fähigkeit des Fahrzeugluftreifens, unter Wasseransammlung den Straßenkontakt zu bewahren.

Vorzugsweise weist der jeweilige Längsabschnitt in Bezug auf die radial äußere Oberfläche des zugehörigen Profilblockelements wenigstens abschnittsweise einen konstanten Abstand auf. Mit anderen Worten weist der erste Längsabschnitt in Bezug auf die radial äußere Oberfläche des zugehörigen Profilblockelements eine erste konstante Höhe auf und/oder der zweite Längsabschnitt weist in Bezug auf die radial äußere Oberfläche des zugehörigen Profilblockelements eine von der ersten Höhe verschiedene zweite konstante Höhe auf. Die Höhe des Längsabschnitts kann auch auf den Abstand zur Rotationsachse des Fahrzeugluftreifens bezogen werden. Die Höhe ist dabei unabhängig des Verlaufs der jeweiligen die Anhebung aufweisenden Rille zu verstehen. Über den jeweiligen Übergangsabschnitt sind die beiden unterschiedlich hohen Anhebungsabschnitte miteinander verbunden.

Für die jeweilige stegförmige Anhebung gilt, dass die nach radial außen gerichteten Oberflächen der Längsabschnitte und der Übergangsabschnitte nicht tiefer als die Hälfte der Profiltiefe der jeweiligen Rille angeordnet sind bzw. verlaufen. Für eine Profiltiefe der jeweiligen Rille von im Ausgangszustand, also nach der Herstellung und vor Inbetriebnahme, beispielsweise 8 mm bedeutet dies etwa, dass die nach radial außen gerichteten Oberflächen der Längsabschnitte bzw. der Übergangsabschnitte maximal 4 mm von der radial äußeren Oberfläche des zugehörigen Profilblockelements beabstandet angeordnet sind bzw. verlaufen. Vorzugsweise ist die nach radial außen gerichtete Oberfläche desjenigen Längsabschnitts, der näher zur radial äußeren Oberfläche des Profilblockelements angeordnet ist, nicht tiefer als ein Viertel, vorzugsweise nicht tiefer als ein Fünftel der Profiltiefe angeordnet. Bevorzugt ist die nach radial außen gerichtete Oberfläche desjenigen Längsabschnitts, der näher zum Rillengrund der jeweiligen Rille angeordnet ist, nicht tiefer als die halbe Profiltiefe, vorzugsweise nicht tiefer als ein Drittel der Profiltiefe, bevorzugt nicht tiefer als ein Viertel der Profiltiefe angeordnet.

Bevorzugt weist die Anhebung ferner einen dritten Längsabschnitt sowie einen zwischen dem dritten Längsabschnitt und dem zweiten Längsabschnitt angeordneten zweiten Übergangsabschnitt auf, wobei der dritte Längsabschnitt und der zweite Längsabschnitt der Anhebung in Bezug auf die radial äußere Oberfläche unterschiedliche Höhen aufweisen. Mit anderen Worten weisen der zweite und dritte Längsabschnitt derselben Anhebung unterschiedliche Abstände zur radial äußeren Oberfläche des Profilblockelements auf. Der zweite Längsabschnitt ist in Längserstreckung der Anhebung zwischen dem ersten und dritten Längsabschnitt angeordnet und beiderends über einen jeweiligen Übergangsabschnitt an den dazu benachbarten Längsabschnitt angebunden.

Vorzugsweise ist der zweite Übergangsabschnitt wenigstens abschnittsweise gekrümmt ausgebildet. Es sei auf die obigen Ausführungen zum ersten Übergangsabschnitt verweisen. Der zweite Übergangsabschnitt kann in Bezug auf eine sich radial erstreckende Ebene zwischen den Übergangsabschnitten vorzugsweise spiegelsymmetrisch ausgebildet sein. In diesem Sinn sind der erste Längsabschnitt und der dritte Längsabschnitt vorzugsweise in Bezug auf die radial äußere Oberfläche gleich hoch ausgebildet. Die Übergangsabschnitte sind demnach gegenläufig steigend und entsprechend gekrümmt ausgeführt.

Bevorzugt sind der erste Längsabschnitt und der dritte Längsabschnitt in Bezug auf die radial äußere Oberfläche höher ausgebildet als der zweite Längsabschnitt. Anders gesagt sind der erste und dritte Längsabschnitt sind in Bezug auf die Rotationsachse des Fahrzeugluftreifens erhabener ausgebildet als der dazwischen angeordnete zweite Längsabschnitt. Die in Längserstreckung äußeren Längsabschnitte können zur radial äußeren Oberfläche den gleichen Abstand aufweisen können. Eine derartige Ausgestaltung ist für eine Anhebung in einer Schulterquerrille des Fahrzeugluftreifens vorteilhaft, da die Schulterquerrille an ihren Enden in axialer Richtung des Fahrzeugluftreifens durch den jeweils höheren Längsabschnitt stabilisiert wird, was die Trockenhandling-Eigenschaften verbessert. Gleichzeitig steht durch den dazwischen liegenden, niedrigeren zweiten Längsabschnitt zwischen dem ersten und dritten Längsabschnitt, insbesondere im Mittelbereich der Schulterquerrille, mehr Rillenvolumen zur Abführung von Wasser zur Verfügung. Der zweite Längsabschnitt ist insbesondere am Ende der Bodenaufstandsfläche bzw. der Lauffläche des Fahrzeugluftreifens angeordnet. In diesem Sinn ist ein Teil der Quer- oder Schrägrillen vorzugsweise jeweils als Schulterquerrille ausgebildet.

Alternativ ist der zweite Längsabschnitt in Bezug auf die radial äußere Oberfläche höher ausgebildet als der erste Längsabschnitt und der dritte Längsabschnitt. Anders gesagt ist der zweite Längsabschnitt in Bezug auf die Rotationsachse des Fahrzeugluftreifens erhabener ausgebildet als der daran angrenzende erste und dritte Längsabschnitt. Auch in diesem Fall können die äußeren Längsabschnitte den gleichen Abstand zur radial äußeren Oberfläche aufweisen. Eine derartige Ausgestaltung ist für eine Anhebung in einer Umfangsrille des Fahrzeugluftreifens vorteilhaft, da das Profilblockelement mittig durch das zusätzliche Material steifer bzw. stabiler ist als an seinen Eckbereichen bzw. Mündungen von Quer- bzw. Schrägrillen, wo aufgrund der niedrigeren Längsabschnitte der Anhebung zusätzliches Rillenvolumen zur Ableitung und Verteilung von Wasser zur Verfügung steht.

In diesem Sinn sind der erste Längsabschnitt und der dritte Längsabschnitt der Anhebung an der Rillenflanke der Umfangsrille und jeweils bevorzugt im Bereich einer jeweiligen mündenden Quer- oder Schrägrille angeordnet. Anders gesagt sind die niedrigeren Längsabschnitte am jeweiligen Eckbereich des Profilblockelements vorgesehen, wo die Umfangsrille eine jeweilige Quer- oder Schrägrille kreuzt. In diesem Bereich muss ein erhöhtes Wasservolumen aufgenommen werden, das von der Mitte der Blockoberfläche (oder Rippenoberfläche) abgeleitet wird.

Vorzugsweise umfasst der Fahrzeugluftreifen ferner Feineinschnitte an der radial äußeren Oberfläche des Laufstreifens, die in die Umfangsrille mündend angeordnet sind. Feineinschnitte verleihen den Profilblockelementen eine besondere Elastizität und verbessern den Fahrkomfort sowie das Bremsverhalten des Fahrzeugluftreifens. Sie verbessern zudem die Traktion auf nassen und rutschigen Oberflächen und führen Wasser von der Reifenoberfläche ab.

Vorzugsweise geht die Anhebung an einer Rillenflanke der Umfangsrille in die weitere Anhebung an einer anschließenden Rillenflanke des Feineinschnitts über, insbesondere mit einer in Bezug auf die radial äußere Oberfläche des jeweiligen Profilblockelements gleichen Höhe bzw. mit einem in Bezug auf die radial äußere Oberfläche des jeweiligen Profilblockelements gleichen Abstand.

Bevorzugt weist der Rillengrund des jeweiligen Feineinschnitts unter Anbindung an die erste oder zweite Rillenflanke des Feineinschnitts eine weitere stegförmige Anhebung auf, die sich in Längsrichtung des Feineinschnitts erstreckt und die in Bezug auf die radial äußere Oberfläche des zugehörigen Profilblockelements einen konstanten Abstand aufweist. Ein derartig ausgebildeter Feineinschnitt ist ein stufenartiger Feineinschnitt. Hinsichtlich der Anhebung des Feineinschnitts sei auf die Ausführungen zu der jeweiligen Anhebung innerhalb einer Quer- oder Schrägrille und innerhalb einer Umfangsrille verwiesen.

Wenn beide Rillenflanken des Feineinschnitts eine jeweilige weitere Anhebung aufweisen, kommen diese nicht miteinander in Kontakt bzw. berühren sich nicht. Dementsprechend ist zwischen den Anhebungen ein Spalt bzw. Freiraum ausgebildet. Der Feineinschnitt ist im Bereich der radial äußeren Oberfläche breiter ausgebildet als am Rillengrund. Der Feineinschnitt weist also radial außen eine Verbreiterung auf. Die weitere Anhebung kann in eine Anhebung an der Rillenflanke der Umfangsrille übergehen, und zwar in Bezug auf die radial äußere Oberfläche des jeweiligen Profilblockelements vorzugsweise auf gleicher Höhe.

Weitere Merkmale, Vorteile und Einzelheiten der Erfindung werden nun anhand der Zeichnungen, die ein Ausführungsbeispiel der Erfindung zeigen, näher beschrieben, wobei gleiche oder ähnliche Bauteile mit demselben Bezugszeichen versehen sind. Dabei zeigen
- Fig. 1: eine erste schematische Perspektivdarstellung eines Laufflächenabschnitts eines Laufstreifens eines erfindungsgemäßen Fahrzeugluftreifens gemäß einer bevorzugten Ausführungsform der Erfindung,
- Fig. 2: eine zweite schematische Perspektivdarstellung des Laufflächenabschnitts des Laufstreifens des erfindungsgemäßen Fahrzeugluftreifens gemäß Figur 1, und
- Fig. 3: eine schematische Perspektivdarstellung eines Schulterabschnitts des Laufstreifens des erfindungsgemäßen Fahrzeugluftreifens gemäß Figur 1 und Figur 2.

Gemäß der Erfindung ausgeführte Fahrzeugluftreifen 1 sind Reifen für Kraftfahrzeuge, insbesondere für mehrspurige Kraftfahrzeuge, vorzugsweise PKW-Reifen für Straßenanwendungen.

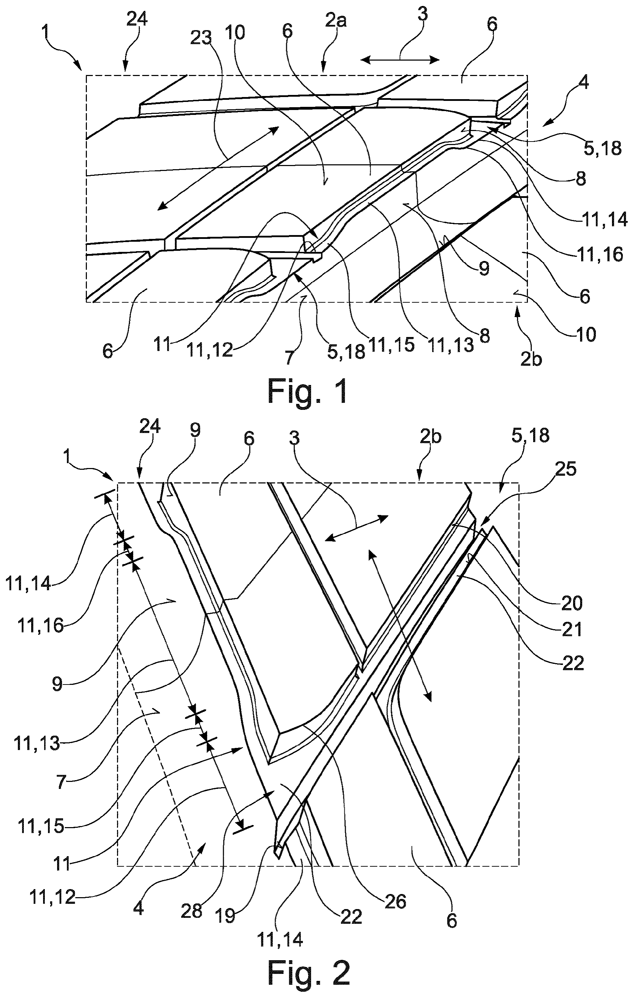

Die Figuren 1 und 2 zeigen jeweils einen Ausschnitt eines Laufstreifens 24 des Fahrzeugluftreifens 1 aus unterschiedlichen Perspektiven. Vorliegend sind zwei Profilblockreihen 2a, 2b des Laufstreifens 24 dargestellt, zwischen denen eine Umfangsrille 4 angeordnet ist, die sich in Umfangsrichtung 23 erstreckt. Die Umfangsrille 4 trennt die beiden benachbarten Profilblockreihen 2a, 2b in axialer Richtung 3 des Fahrzeugluftreifens 1 voneinander. Die Profilblockreihen 2a, 2b sind demnach in axialer Richtung 3 des Fahrzeugluftreifens 1 durch die Umfangsrille 4 begrenzt. Die Umfangsrille 4 weist in Umfangsrichtung 23 des Laufstreifens 24 bzw. des Fahrzeugluftreifens 1 hintereinander angeordnete Profilblockelemente 6 auf.

Die Profilblockelemente 6 sind in Umfangsrichtung 23 durch an einer radial äußeren Oberfläche 10 der Profilblockelemente 6 bzw. des Laufstreifens 24 ausgebildete Feineinschnitte 18 unterteilt, die jeweils in die Umfangsrille 4 münden.

Die Umfangsrille 4 ist durch einen Rillengrund 7 und zwei Rillenflanken 8, 9 begrenzt. Der jeweilige Feineinschnitt 18 ist ebenfalls durch einen Rillengrund 19 und zwei Rillenflanken 20, 21 begrenzt.

Die jeweilige Rillenflanke 8, 9, 20, 21 erstreckt sich in radialer Richtung ausgehend vom zugehörigen Rillengrund 7, 19 bis zu einer radial äußeren Oberfläche 10 des von ihr begrenzten Profilblockelements 6, wobei die jeweilige Rillenflanke 8, 9, 20, 21 im Querschnitt stufenweise ausgebildet ist. Die Stufe ist gebildet durch eine stegförmige Anhebung 11, 22, die am zugehörigen Rillengrund 7, 19 und an jeweils eine der beiden Rillenflanken 8, 9, 20, 21 der Umfangsrille 4 bzw. dem Feineinschnitt 18 angebunden ist.

Der Rillengrund 7 weist unter Anbindung an die erste Rillenflanke 8 der Umfangsrille 4 eine stegförmige Anhebung 11 auf. Außerdem weist der Rillengrund 7 unter Anbindung an die zweite Rillenflanke 9 der Umfangsrille 4 eine weitere stegförmige Anhebung 11 auf. In Figur 1 ist die an die erste Rillenflanke 8 einteilig angebundene Anhebung 11 der Umfangsrille 4 gezeigt, während in Figur 2 die an die zweite Rillenflanke 9 einteilig angebundene Anhebung 11 der Umfangsrille 4 gezeigt ist. Die Anhebungen der Umfangsrille 4 verlaufen parallel zueinander und sind frei von Kontaktierungsflächen zueinander. Die Umfangsrille 4 ist am Rillengrund 7 schmaler ausgebildet ist als im Bereich der radial äußeren Oberfläche 10 des jeweiligen Profilblockelements 6.

Nach Figur 2 sind in dem jeweiligen Feineinschnitt 18 ebenfalls zwei Anhebungen 22 vorgesehen, und zwar an jeder Rillenflanke 20, 21 jeweils eine Anhebung 22, die ebenfalls parallel zueinander verlaufen und frei von Kontaktierungsflächen zueinander sind. In Figur 2 ist dargestellt, dass zwischen den beiden Anhebungen 22 ein schmaler Spalt 25 ausgebildet ist, so dass der Feineinschnitt 18 am Rillengrund 19 schmaler ausgebildet ist als im Bereich der radial äußeren Oberfläche 10 des jeweiligen Profilblockelements 6.

Die jeweilige Anhebung 11 der Umfangsrille 4 weist nach Figur 4 im Bereich eines Profilblockelements 6 einen ersten Längsabschnitt 12, einen zweiten Längsabschnitt 13 sowie einen dritten Längsabschnitt 14 auf, wobei der erste und zweite Längsabschnitt 12, 13 über einen dazwischen angeordneten ersten Übergangsabschnitt 15 miteinander einteilig verbunden sind, und wobei der zweite und dritte Längsabschnitt 13, 14 über einen dazwischen angeordneten zweiten Übergangsabschnitt 16 miteinander einteilig verbunden sind. Die Übergangsabschnitte 15, 16 sind hier gegenläufig gekrümmt zueinander ausgebildet. In Bezug auf eine sich radial erstreckende Mittelachse des zweiten Längsabschnitts 13 sind die Übergangsabschnitte 15, 16 spiegelsymmetrisch ausgebildet.

Wenigstens zwei der Längsabschnitte 12, 13, 14 weisen in Bezug auf die radial äußere Oberfläche 10 des jeweiligen Profilblockelements 6 oder eine - hier nicht gezeigte - Rotationsachse des Fahrzeugluftreifens 1 unterschiedliche Höhen auf. Vorliegend sind der erste Längsabschnitt 12 und der dritte Längsabschnitt 14 in Bezug auf die radial äußere Oberfläche 10 bzw. auf eine - hier nicht gezeigte - Rotationsachse des Fahrzeugluftreifens 1 im Wesentlichen gleich hoch ausgebildet, während der zweite Längsabschnitt 13 eine dazu verschieden Höhe aufweist. In diesem Ausführungsbeispiel ist der zweite Längsabschnitt 13 in Bezug auf die radial äußere Oberfläche 10 höher ausgebildet als der erste Längsabschnitt 12 und der dritte Längsabschnitt 14.

Die Längsabschnitte 12, 13, 14 weisen in ihrer Längserstreckung bzw. entlang der Umfangsrille 4 und in Bezug auf die radial äußere Oberfläche 10 des zugehörigen Profilblockelements 6 jeweils einen im Wesentlichen konstanten Abstand auf. Mithin ist die Form der Längsabschnitte 12, 13, 14 korrespondierend zur Form der radial äußeren Oberfläche 10 des zugehörigen Profilblockelements 6 sowie unabhängig der Form und des Verlaufs des Rillengrundes 7 der Umfangsrille 4.

Die jeweilige Anhebung 22 im Feineinschnitt 18 weist in ihrer Längserstreckung und in Bezug auf die radial äußere Oberfläche 10 des zugehörigen Profilblockelements 6 einen im Wesentlichen konstanten Abstand auf.

Die wellenartig geformte Stufe bzw. die Anhebung 11 an der jeweiligen Rillenflanke 8, 9 der Umfangsrille 4 kann sich, wie in Figur 2 gezeigt, auf das in Umfangsrichtung 23 folgende Profilblockelement 6 in der ersten Profilblockreihe 2a fortführen und so zum Beispiel eine Welle in der jeweiligen Rillenflanke 8, 9 der Umfangsrille 4 bilden. Mithin erstreckt sich die Anhebung 11 an der jeweiligen Rillenflanke 8, 9 der Umfangsrille 4 vollumlaufend um den Fahrzeugluftreifen 1 und wird lediglich durch die Feineinschnitte 18 teilweise unterbrochen, hier angeschnitten. Mithin liegt der Rillengrund 19 des Feineinschnitts 18 in Bezug auf die Rotationsachse des Fahrzeugluftreifens bzw. der radial äußeren Oberfläche 10 höher als der Rillengrund 7 der Umfangsrille 4.

Der erste Längsabschnitt 12 und der dritte Längsabschnitt 14 der Anhebung 11 des jeweiligen Profilblockelements 6 sind an der Rillenflanke 8, 9 der Umfangsrille 4 im Bereich des jeweiligen mündenden Feineinschnitts 18 angeordnet. Anders gesagt ist in dem vorliegenden Beispiel die jeweilige stufenartige Anhebung 11 der Umfangsrille 4 an den Stellen tiefer ausgeführt, an denen jeweils ein Feineinschnitt 18 in die Umfangsrille 4 mündet, da im Kreuzungsbereich ein erhöhtes Wasservolumen aufgenommen bzw. abgeleitet werden muss, das von der Mitte der radial äußeren Oberfläche 10 abgeleitet wird. Am zweiten Längsabschnitt 13 der jeweiligen Anhebung 11 ist die Stufe höher ausgeführt bzw. näher zur radial äußeren Oberfläche 10 angeordnet, um dem jeweiligen Profilblockelement 6 zusätzliche Stabilität zu verleihen.

In Figur 2 ist zudem dargestellt, dass sich der der radial äußeren Oberfläche 10 zugewandte Bereich des Feineinschnitts 18 zur Umfangsrille 4 hin vergrößert. Vorliegend ist der Winkel einer Kante 26 an der Mündung zwischen dem Feineinschnitt 18 und der Umfangsrille 4 in Bezug zur Umfangsrille 4 stumpfer als der übrige Verlauf des Feineinschnitts 18. Dies optimiert unregelmäßigen Abrieb des Profilblockelements 6 und gibt zusätzliches Rillenvolumen im Kreuzungsbereich 28 frei. Damit variiert auch die Breite der Anhebung 11 bzw. 22.

Mit der Wellenform der jeweiligen Anhebung 11, 22 kann eine Kombination aus einer Stabilität fördernden Funktion und entwässernden Eigenschaften realisiert werden, und zwar an den Stellen, wo die Funktion jeweils erforderlich ist. Zudem gewährleisten unterschiedliche Höhen der Längsabschnitte 12, 13, 14 der jeweiligen Anhebung 11 in der Umfangsrille 4 eine länger anhaltende Funktion über den Abrieb. Dadurch bleiben über eine größere Lebensdauer entwässernde Elemente der Anhebung 11, nämlich der erste und dritte Längsabschnitt 12, 14, im Profil des Laufstreifens 24 erhalten.

Mit den in der Umfangsrille 4 angeordneten Anhebungen 11 sowie in den Feineinschnitten 18 angeordneten weiteren Anhebungen 22 wird also eine Verbesserung der Nässeeigenschaften wie Aquaplaning und Nassgriff des Fahrzeugluftreifens 1 realisiert. Gleichzeitig wirken sich die Anhebungen 11, 22 nicht nachteilig auf den Abrieb des Laufstreifens 24 aus.

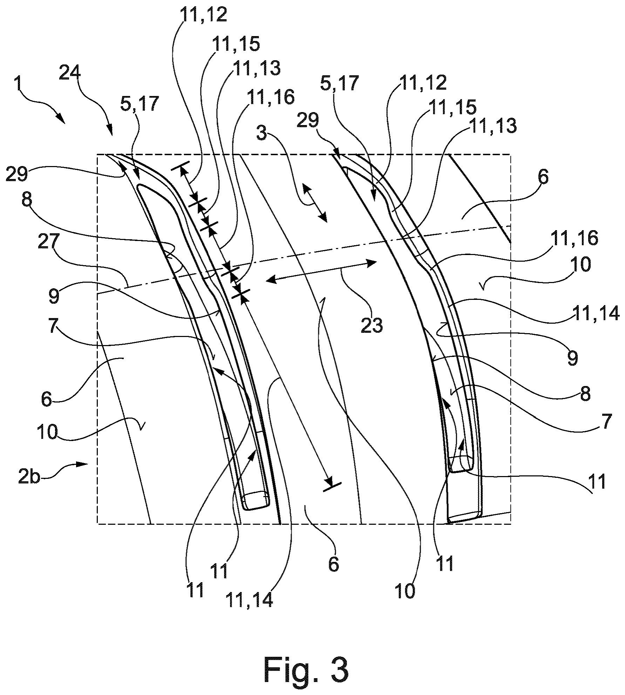

Nach Figur 3 weist der Fahrzeugluftreifen 1 am axialen Ende des Laufstreifens 24 ferner Quer- oder Schrägrillen 5 in Form von Schulterquerrillen 17 auf, die in die Umfangsrille 4 münden.

Die jeweilige Schulterquerrille 17 ist durch einen Rillengrund 7 und zwei Rillenflanken 8, 9 begrenzt. Die jeweilige Rillenflanke 8, 9 erstreckt sich in radialer Richtung ausgehend vom zugehörigen Rillengrund 7 bis zu einer radial äußeren Oberfläche 10 des von ihr begrenzten Profilblockelements 6, wobei die jeweilige Rillenflanke 8, 9 im Querschnitt stufenweise ausgebildet ist. Die Stufe ist gebildet durch eine stegförmige Anhebung 11, die am zugehörigen Rillengrund 7 und an jeweils eine der beiden Rillenflanken 8, 9 der jeweiligen Schulterquerrille 17 angebunden ist.

Der Rillengrund 7 der jeweiligen Schulterquerrille 17 weist also unter Anbindung an die erste Rillenflanke 8 eine stegförmige Anhebung 11 auf. Außerdem weist der Rillengrund 7 unter Anbindung an die zweite Rillenflanke 9 derselben Schulterquerrille 17 eine weitere stegförmige Anhebung 11 auf. Die Anhebungen 11 der Schulterquerrille 17 verlaufen im Wesentlichen parallel zueinander und werden hier im Bereich der Umfangsrille 4 zusammengeführt. Lediglich im Bereich der radial äußeren Oberfläche 10 verbleibt ein schmaler Kanal 29 zur Rest-Querentwässerung. Das geringe Volumen des flachen Kanals 29 zur Umfangsrille 4 hin bietet nur wenig Möglichkeit zur Geräuschentwicklung und trotzdem hilft dieser Kanal für die erforderlichen Nasseigenschaften. Aufbauende Schallwellen werden durch Strukturen innerhalb der Rillen gestört bzw. gebrochen. Dadurch entsteht weniger Abstrahlgeräusch zur Seite. Mithin verbessert der Kanal 29 zwischen der Schulterquerrille 17 und einer Umfangsrille 4 die akustischen Eigenschaften des Fahrzeugluftreifens 1.

Analog zu Figur 1 und Figur 2 weist die jeweilige Anhebung 11 der Schulterquerrille 17 einen ersten Längsabschnitt 12, einen zweiten Längsabschnitt 13 sowie einen dritten Längsabschnitt 14 auf, wobei der erste und zweite Längsabschnitt 12, 13 über einen dazwischen angeordneten ersten Übergangsabschnitt 15 miteinander einteilig verbunden sind, und wobei der zweite und dritte Längsabschnitt 13, 14 über einen dazwischen angeordneten zweiten Übergangsabschnitt 16 miteinander einteilig verbunden sind. Die Übergangsabschnitte 15, 16 sind hier gegenläufig gekrümmt zueinander ausgebildet.

Im Gegensatz zu den Anhebungen 11 innerhalb der Umfangsrille 4 sind in der jeweiligen Schulterquerrille 17 der erste Längsabschnitt 12 und der dritte Längsabschnitt 14 in Bezug auf die radial äußere Oberfläche 10 bzw. die Rotationsachse des Fahrzeugluftreifens 1 höher ausgebildet sind als der zweite Längsabschnitt 13. Der zweite Längsabschnitt 13 der jeweiligen Anhebung 11 ist im Bereich einer Kante 27 einer Bodenaufstandsfläche des Laufstreifens 24 angeordnet. Die Schulterquerrille 17 ist am Rillengrund 7 schmaler ausgebildet ist als im Bereich der radial äußeren Oberfläche 10 des jeweiligen Profilblockelements 6.

Am Ende der Bodenaufstandsfläche, also im Bereich des zweiten Längsabschnitts 13 der jeweiligen Anhebung 11, weist die Schulterquerrille 17 aufgrund der hier niedriger ausgeführten Anhebung 11 einen größeren freien Rillenquerschnitt auf als im Bereich des ersten Längsabschnitt 12 bzw. des dritten Längsabschnitts 14, wo die Anhebungen 11 in der Schulterquerrille 17 in Bezug auf die radial äußere Oberfläche 10 bzw. der Rotationsachse des Fahrzeugluftreifens 1 höher ausgebildet sind. Der größere Rillenquerschnitt am zweiten Längsabschnitt 13 der jeweiligen Anhebung 11 ermöglicht eine verbesserte Querentwässerung an der Kante 27 der Bodenaufstandsfläche. Die Vertiefung der Stufe am zweiten Längsabschnitt 13 hat darüber hinaus den Vorteil, dass sie über die Lebensdauer des Fahrzeugluftreifens, also über den Abrieb, etwas länger erhalten bleibt und somit zu den Nasseigenschaften weiterhin beitragen kann.

Im Verlauf der Schulterquerrille 17 nach axial außen des Fahrzeugluftreifens 1 erhöht sich die Anhebung 11 am dritten Längsabschnitt 14 wieder, um mehr Stabilität für das Trockenhandling zu gewährleisten. Vom zweiten Längsabschnitt 13 nach axial innen zur Umfangsrille 4 hin erhöht sich die Anhebung 11 ebenfalls wieder, um für verschiedene Trockeneigenschaften und für Abrieb genügend Steifigkeit zu gewährleisten.

Die Erfindung ist nicht auf die hier beschriebene Ausführungsform beschränkt. Auch alternative Gestaltungsvarianten sind denkbar. Insbesondere ist eine Breiten- und Höhenveränderung der jeweiligen Anhebung 11, 22 auch an anderen Stellen denkbar und vorteilhaft realisierbar. Die jeweilige stegförmige Anhebung 11, 22 könnte sich im Verlauf auch verschmälern oder auch verbreitern, ohne Einfluss auf den Verlauf der radial außerhalb liegenden Kante des Profilblockelements 6 zu haben. Das heißt die jeweilige Anhebung 11, 22 kann mehr oder weniger stark in die Umfangsrille 4, Quer- oder Schrägrille 5 oder Feineinschnitte 18 hereinragen.

Im Anwendungsbereich der wellenförmigen Stufe bzw. Anhebung sind zudem jegliche Kombinationen von Tiefen und Breiten sowohl der Stufe an sich als auch der Position und Verlauf der Blockkante des jeweiligen Profilblockelements 6 möglich und je nach Position entlang der jeweiligen Rille sinnvoll.

### Bezugszeichenliste

- 1: Fahrzeugluftreifen
- 2a, 2b: Profilblockreihe
- 3: Axiale Richtung des Fahrzeugluftreifens
- 4: Umfangsrille
- 5: Quer- oder Schrägrille
- 6: Profilblockelement
- 7: Rillengrund
- 8: Erste Rillenflanke
- 9: Zweite Rillenflanke
- 10: Oberfläche des Profilblockelements
- 11: Anhebung
- 12: Erster Längsabschnitt der Anhebung
- 13: Zweiter Längsabschnitt der Anhebung
- 14: Dritter Längsabschnitt der Anhebung
- 15: Erster Übergangsabschnitt der Anhebung
- 16: Zweiter Übergangsabschnitt der Anhebung
- 17: Schulterquerrille
- 18: Feineinschnitt
- 19: Rillengrund des Feineinschnitts
- 20: Erste Rillenflanke des Feineinschnitts
- 21: Erste Rillenflanke des Feineinschnitts
- 22: Anhebung
- 23: Umfangsrichtung
- 24: Laufstreifen
- 25: Spalt
- 26: Kante
- 27: Kante
- 28: Kreuzungsbereich
- 29: Kanal

## Patentansprüche

1. Fahrzeugluftreifen (1) mit wenigstens einer Profilblockreihe (2a, 2b), die in axialer Richtung (3) des Fahrzeugluftreifens (1) durch eine Umfangsrille (4) begrenzt sowie aus einer Vielzahl von in Umfangsrichtung (23) des Fahrzeugluftreifens (1) hintereinander angeordneten und jeweils durch eine in die Umfangsrille (4) mündende Quer- oder Schrägrille (5) von einander beabstandeten Profilblockelementen (6) ausgebildet ist, wobei die Umfangsrille (4) sowie die Quer- oder Schrägrillen (5) jeweils durch einen Rillengrund (7) und zwei Rillenflanken (8, 9) begrenzt sind, wobei sich die jeweilige Rillenflanke (8, 9) in radialer Richtung ausgehend vom zugehörigen Rillengrund (7) bis zu einer radial äußeren Oberfläche (10) des von ihr begrenzten Profilblockelements (6) erstreckt, wobei der Rillengrund (7) unter Anbindung an die erste oder zweite Rillenflanke (8, 9) der Umfangsrille (4) und/oder der Quer- oder Schrägrille (5) eine jeweilige stegförmige Anhebung (11) aufweist, die sich in Längsrichtung der Umfangsrille (4) und/oder der Quer- oder Schrägrille (5) erstreckt, wobei die Anhebung (11) einen ersten Längsabschnitt (12), einen zweiten Längsabschnitt (13) und einen dazwischen angeordneten ersten Übergangsabschnitt (15) aufweist, und wobei der erste Längsabschnitt (12) und der zweite Längsabschnitt (13) in Bezug auf die radial äußere Oberfläche (10) des zugehörigen Profilblockelements (6) unterschiedliche Höhen aufweisen, **dadurch gekennzeichnet, dass** der erste Übergangsabschnitt (15) wenigstens abschnittsweise gekrümmt ausgebildet ist.

2. Fahrzeugluftreifen (1) nach Anspruch 1, **dadurch gekennzeichnet, dass** der jeweilige Längsabschnitt (12, 13) in Bezug auf die radial äußere Oberfläche (10) des zugehörigen Profilblockelements (6) wenigstens abschnittsweise einen konstanten Abstand aufweist.

3. Fahrzeugluftreifen (1) nach Anspruch 1 oder Anspruch 2, **dadurch gekennzeichnet, dass** die Anhebung (11) ferner einen dritten Längsabschnitt (14) sowie einen zwischen dem dritten Längsabschnitt (14) und dem zweiten Längsabschnitt (13) angeordneten zweiten Übergangsabschnitt (16) aufweist, wobei der dritte Längsabschnitt (14) und der zweite Längsabschnitt (13) der Anhebung (11) in Bezug auf die radial äußere Oberfläche (10) unterschiedliche Höhen aufweisen.

4. Fahrzeugluftreifen (1) nach Anspruch 3, **dadurch gekennzeichnet, dass** der zweite Übergangsabschnitt (16) wenigstens abschnittsweise gekrümmt ausgebildet ist.

5. Fahrzeugluftreifen (1) nach Anspruch 3 oder Anspruch 4, **dadurch gekennzeichnet, dass** der erste Längsabschnitt (12) und der dritte Längsabschnitt (14) in Bezug auf die radial äußere Oberfläche (10) im Wesentlichen gleich hoch ausgebildet sind.

6. Fahrzeugluftreifen (1) nach einem der der Ansprüche 1 bis 5, **dadurch gekennzeichnet, dass** der erste Längsabschnitt (12) und der dritte Längsabschnitt (14) in Bezug auf die radial äußere Oberfläche (10) höher ausgebildet sind als der zweite Längsabschnitt (13).

7. Fahrzeugluftreifen (1) nach einem der Ansprüche 1 bis 5, **dadurch gekennzeichnet, dass** der zweite Längsabschnitt (13) in Bezug auf die radial äußere Oberfläche (10) höher ausgebildet ist als der erste Längsabschnitt (12) und der dritte Längsabschnitt (14).

8. Fahrzeugluftreifen (1) nach einem der Ansprüche 3 bis 7, **dadurch gekennzeichnet, dass** der erste Längsabschnitt (12) und der dritte Längsabschnitt (14) der Anhebung (11) an der Rillenflanke (8, 9) der Umfangsrille (4) im Bereich einer jeweiligen mündenden Quer- oder Schrägrille (5) angeordnet sind.

9. Fahrzeugluftreifen (1) nach einem der vorhergehenden Ansprüche, **dadurch gekennzeichnet, dass** ein Teil der Quer- oder Schrägrillen (5) als Schulterquerrillen (17) ausgebildet ist.

10. Fahrzeugluftreifen (1) nach einem der vorhergehenden Ansprüche, **gekennzeichnet durch** Feineinschnitte (18) an der radial äußeren Oberfläche (10) des Laufstreifens (24), die in die Umfangsrille (4) mündend angeordnet sind.

11. Fahrzeugluftreifen (1) nach Anspruch 10, **dadurch gekennzeichnet, dass** ein Rillengrund (19) des jeweiligen Feineinschnitts (18) unter Anbindung an eine erste oder zweite Rillenflanke (20, 21) eine weitere stegförmige Anhebung (22) aufweist, die sich in Längsrichtung des Feineinschnitts (18) erstreckt und die in Bezug auf die radial äußere Oberfläche (10) des zugehörigen Profilblockelements (6) einen konstanten Abstand aufweist.

12. Fahrzeugluftreifen (1) nach einem der vorhergehenden Ansprüche, **dadurch gekennzeichnet, dass** die Anhebung (11) an einer Rillenflanke (9, 9) der Umfangsrille (4) in die weitere Anhebung (22) an einer anschließenden Rillenflanke (20, 21) des Feineinschnitts (18) übergeht.
